# EUROPÄISCHE PATENTSCHRIFT

(11) **EP 2 379 361 B1**
(45) Veröffentlichungstag und Bekanntmachung des Hinweises auf die Patenterteilung: **24.10.2012**
(21) Anmeldenummer: 10708943.5
(22) Anmeldetag: 22.01.2010
(51) Int. Cl.: B60K 15/03, B60K 15/035

(54) **KRAFTSTOFFBEHÄLTER MIT EINGEBAUTEM ZUSATZBEHÄLTER**
FUEL TANK HAVING A BUILT-IN AUXILIARY TANK
RÉSERVOIR DE CARBURANT COMPORTANT UN RÉSERVOIR SUPPLÉMENTAIRE INTÉGRÉ

(30) Priorität: 22.01.2009 DE 102009005826
(43) Veröffentlichungstag der Anmeldung: 26.10.2011
(73) Patentinhaber: MAGNA STEYR Fuel Systems GesmbH, 8261 Sinabelkirchen (AT)
(72) Erfinder: POZGAINER, Günther, A-8045 Graz (AT); POLIFKE, Mark, 50226 Frechen (DE)
(74) Vertreter: Rausch, Gabriele
(86) Internationale Anmeldenummer: PCT/EP2010/050740
(87) Internationale Veröffentlichungsnummer: WO 2010/084178

(56) Entgegenhaltungen:
- EP-A1- 1 084 889
- EP-A1- 1 310 715
- EP-A2- 1 213 173
- DE-A1- 19 909 041
- GB-A- 2 408 972
- US-A- 4 531 653
- US-A1- 2008 149 642

## Beschreibung

### Gegenstand

Die Erfindung betrifft einen Kraftstoffbehälter für Kraftfahrzeuge aus Kunststoff, in dessen Innerem sich ein Einsatz befindet, der einen Raum umschließt. Die Wand des Kraftstoffbehälters kann aus einem einzigen blasgeformten Teil mit einer ausreichend großen Öffnung oder aus zwei gepressten oder tiefgezogenen und dann miteinander verbundenen Kunststoffschalen bestehen. Bei den genannten Verformungsverfahren wird eine Form verwendet und der Kunststoff in warmem Zustand verformt. Die Wände können zur Minimierung der Permeation von Kraftstoffdämpfen auch mehrschichtig sein. Der Einsatz kann von verschiedener Art sein, in der Regel ist er Teil eines Entlüftungssystems, etwa ein Abscheider, Ausperlbehälter und/oder eine Schwimmerkammer.

### Stand der Technik

Bei den üblichen Kraftstoffbehältern aus Kunststoff sind die Teile des Entlüftungssystems einzeln innen an der oberen Schale entweder angeschweißt (siehe zum Beispiel die EP 1 310 715A1) oder an in Durchbrechungen der Schale befestigten Schweißkronen angebracht (siehe zum Beispiel die EP 1 084 889 A1).

Aus der US 4,531,653 ist ein quaderförmiger Kraftstoffbehälter aus Metallblech bekannt, an dessen ebenem Plafond innen ein Stapel aus drei rechteckigen profilierten Blechen angeschweißt ist. Diese Bleche sind miteinander zu einem steifen Körper verschweißt, der sich horizontal über die gesamte Grundfläche des Kraftstoffbehälters erstreckt. Er bildet Kammern, die miteinander beziehungsweise mit dem Inneren des Kraftstoffbehälters und der Atmosphäre in Verbindung stehen. Diese Konstruktion ist aufwändig und nur bei einem ebenen Plafond aus Blech anwendbar. Und sogar dann bleibt ihre Haltbarkeit wegen der Toleranzen und wegen durch das Schweißen verursachter Eigenspannungen zweifelhaft.

Aus der EP 1 213 173 ist ein Kraftstoffbehälter aus Kunststoff bekannt, an dessen oberer Wand innen ein einen geschlossenen Raum bildender Körper, der dort als Verdampfer bezeichnet ist, angeschraubt ist. Dazu ist die Wand mit hinterschnittenen Tragteilen versehen, was dessen Herstellung schwierig und teuer macht. Ein ebenso komplizierter Teil ist auch der angeschraubte Körper, dessen Montage noch dazu sehr aufwändig ist.

Schließlich ist aus der gattungsgemäßen US 2008/0149642 A1 ein Kraftstoffbehälter aus thermoplastischem Kunststoff bekannt, der Einbauteile enthält, die in der ersten Hitze bei der Ausformung des Behälters mit diesem verschweißt sind. Um zu erreichen, dass der fertige Artikel durch die darauf folgende Gasspülung gleichmäßig und ohne Schrumpfungsverzug abkühlt, ist das Einbauteil mit der Behälterwand derartig verbunden, dass es zusammen mit der Behälterwand ein getrenntes Volumen definiert. Dieses Volumen kann ein Kanal oder auch ein am Boden des Tanks angeordneter Schwallbehälter sein. Weiter gehende Anwendungen sind nicht angedacht.

### Problem/Lösung

Es ist somit die der Erfindung zugrunde liegende Aufgabe, den Einsatz eines aus Kunststoff bestehenden Kraftstoffbehälters so auszubilden, dass bei einfacher Form der Wand des Kraftstoffbehälters und des Einsatzes und einfachster Montage des Einsatzes eine hohe Raumökonomie und Gestaltungsfreiheit erreicht ist. Dieser Einsatz soll auch für Kraftstoffbehälter geeignet sein, deren obere Wand bedingt durch die Einbauverhältnisse im Fahrzeug eine unebene Raumform hat.

Erfindungsgemäß wird das mit den kennzeichnenden Merkmalen des ersten Anspruches erreicht. Dadurch dass der Einsatz eine oben offene Schachtel ist, ist sie billig zu fertigen und einfach und schnell durch stoffschlüssige Verbindung mit der Wand des Kraftstoffbehälters verbindbar. Die dadurch erreichte Raumökonomie erlaubt bei geringem Raumbedarf im Tank einen relativ großen Raum im Inneren des Einsatzes. Dieser bietet allerlei Innenteilen Raum und bringt bei Verwendung als Ausperlbehälter auch funktionelle Vorteile.

Der Einsatz ist ein flächiger Bauteil mit einer offenen Raumform, er kann somit in einer einfachen Form gespritzt oder aus einem ebenen Ausgangsmaterial gepresst sein. Der Verlauf der Oberkante der Seitenwände kann leicht der Raumform der Wand des Kraftstoffbehälters angepasst werden. Dabei ist die Wand zugleich der Deckel, der den Einsatz nach oben abschließt.

Die offene Form des Einsatzes erlaubt es auch, ohne Mehraufwand in der Fertigung als Einbauten im Einsatz Zwischenwände vorzusehen, welche ebenso mit der Wandung dicht verbindbar sind. (Anspruch 2). Die Freiheit der Formgebung erlaubt es auch, den Boden des Einsatzes geneigt auszubilden, sodass der Abfluss weitgehend lageunabhängig gesichert ist (Anspruch 3).

Um eine dichte und haltbare Schweißverbindung zu erhalten, hat der Schweißflansch an der Oberkante der Seitenwände des Einsatzes einen rundum verlaufenden Schweißflansch mit einer in die Wand des Kraftstoffbehälters eintauchende Wurzelrippe (Anspruch 4), deren Querschnitt mit Vorteil keilförmig ist (Anspruch 6). Die auf eine spitze Kante zulaufende Wurzelrippe dringt leicht in die warme Kunststoffschale ein, sie nimmt besonders schnell deren Temperatur an und verbindet sich so fest mit ihr. Deshalb braucht der Einsatz zum Einbau nicht erwärmt zu werden, was den Einbau vereinfacht. Auch die Zwischenwände im Einsatz können ganz oder teilweise mit einem solchen Schweißflansch versehen sein (Anspruch 5).

In einer vorteilhaften Ausführungsform hat die obere Wand des Kraftstoffbehälters eine Öffnung, durch die ein Bereich des Inneren des Einsatzes mit außerhalb des Kraftstoffbehälters angebrachten Teilen in Verbindung steht (Anspruch 7). Das aus dieser Öffnung zu einem Aktivkohlefilter oder einem Ventil geführte Luft-Dampf-Gemisch ist dank der als Flüssigkeitsfalle dienenden Zwischenwände, und des großen Volumens des Raumes frei von Kraftstofftröpfchen.

In einer weiteren besonders vorteilhaften Ausführungsform hat der Einsatz zwei Stutzen an einander gegenüber stehenden Seitenwänden, wobei dem einen Stutzen, einem Einströmstutzen, Zwischenwände als Tropfenfänger zugeordnet sind und zu dem anderen Stutzen, einem Abströmstutzen, ein von Zwischenwänden gebildeter Kanal führt, der in der Mitte des Einsatzes in der oberen Region einen horizontalen Schlitz frei lässt (Anspruch 8). Durch den Schlitz direkt an der oberen Wand des Kraftstoffbehälters kann keine Flüssigkeit in den Kanal übertreten. Für eine Betriebsentlüftung ist mindestens ein weiterer in den von dem Einsatz gebildeten Raum mündender Stutzen vorgesehen (Anspruch 9), besser aber zwei.

### Figuren

- Fig. 1:: Seitenansicht eines erfindungsgemäßen Kraftstoffbehälters mit Einsatz in einer ersten Ausführungsform,
- Fig. 2:: Draufsicht zu Fig. 1,
- Fig. 3:: Stirnansicht zu Fig. 1,
- Fig. 4:: Axonometrische Ansicht von schräg oben zu Fig. 2, vergrößert,
- Fig. 5:: Schnitt V-V in Fig. 1,
- Fig. 6:: Axonometrische Ansicht einer zweiten Ausführungsform,
- Fig. 7:: Schnitt nach VII-VII zu Fig. 6 mit Vergrößerungsblasen.

### Beschreibung

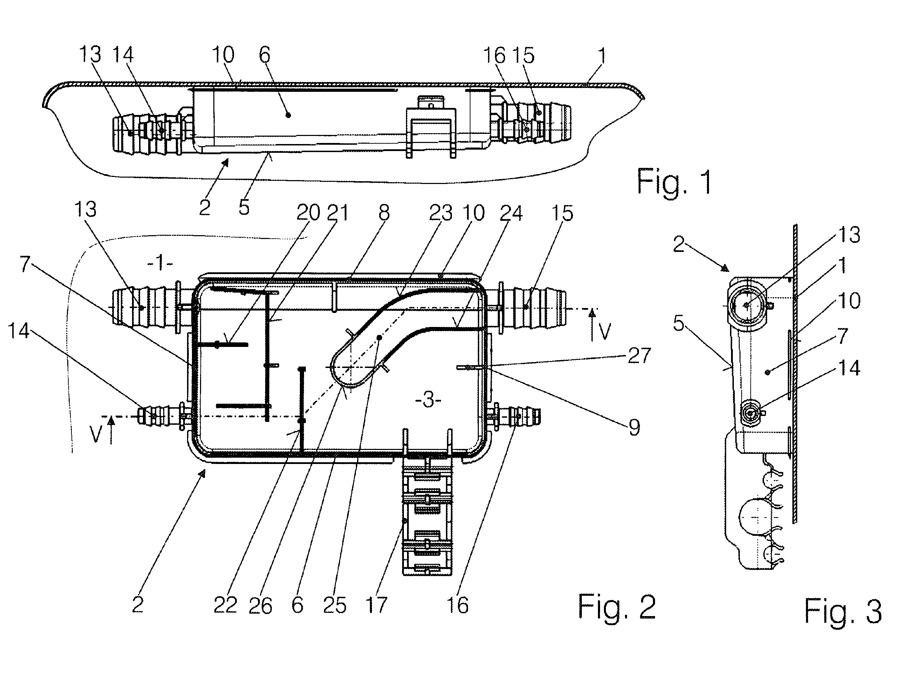

In den **Fig. 1 bis 5** ist von einem Kraftstoffbehälter nur ein abgerissener Teil der oberen Wand 1 und ein an deren Innenseite befestigter Einsatz 2 zu sehen, der einen geschlossenen Raum 3 bildet. Der Einsatz 2 ist ein Bauteil in Form einer oben offenen Schachtel, das aus einem leicht geneigten (siehe Fig. 3) Boden 5 und vertikalen Seitenwänden 6,7,8,9 besteht. Die Schachtel kann auch eine zylindrische oder sonstig geformte Seitenwand haben. Die Oberkanten der Seitenwände 6,7,8,9 haben einen Schweißflansch 10, der mit der Wand des Kraftstoffbehälters stoffschlüssig verbunden, angeschweißt, ist.

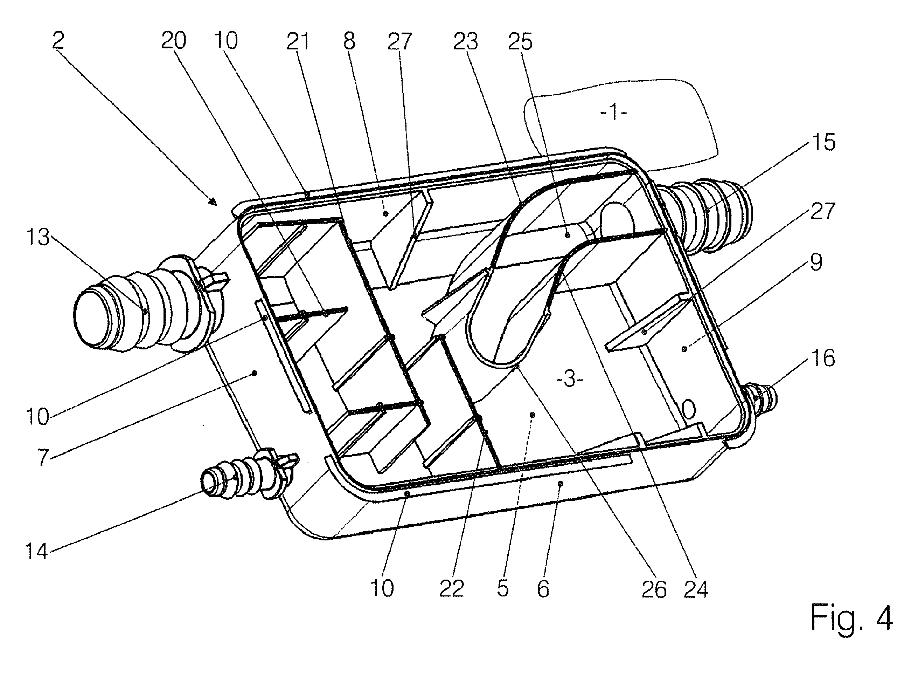

Ein erster Stutzen 13 und ein zweiter Stutzen 14 ragen aus der Seitenwand 7, ein dritter Stutzen 15 und ein vierter Stutzen 16 ragen aus der Seitenwand 9. Die Stutzen 13,14,15,16 sind mit den Seitenwänden 7,9 einstückig und stellen die Verbindung zwischen dem Raum 3 im Inneren des Einsatzes 2 und Rohren oder Schläuchen her. Diese und deren Zielstationen sind nicht dargestellt: Vom Stutzen 13 zu einem Abschaltventil mit Schwimmer, vom Stutzen 15 zu einem Aktivkohlefilter, von voneinander entfernten Betriebsentlüftungsöffnungen mit Rollover - Ventil zu den Stutzen 14,16. An der Seitenwand 6 ist eine Konsole 17 zur Abstützung von Leitungen angeformt. Im Raum 3 können auch Versteifungsrippen 27 (siehe Fig. 4) sein.

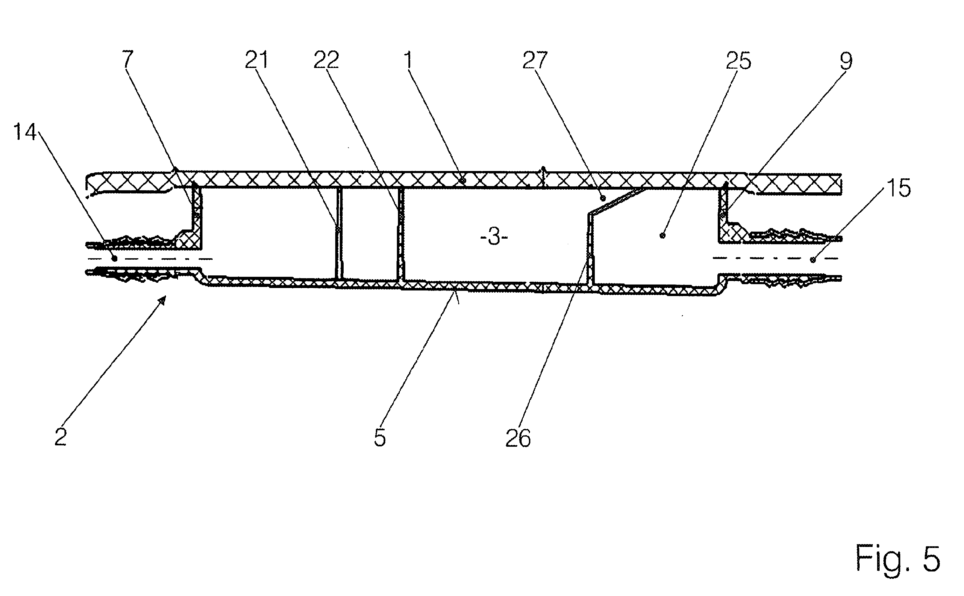

Die Innenteile sind hier diverse Zwischenwände. Die Zwischenwände 20,21,22 reichen vom Boden 5 zur Tankwand 1 und sind mit dieser verschweißt. Sie bilden Schikanen mit Prallflächen als Flüssigkeitsfalle. Die Zwischenwände 23,24 bilden einen zum Stutzen 15 führenden Kanal 25. Sie reichen großteils vom Boden 5 zur Tankwand 1, zwischen ihrem in die Mitte des Einsatzes reichenden Teil 25 und der Wand 1 des Tanks klafft aber ein Spalt 26 (siehe Fig. 5), durch den Gas in den an der höchsten Stelle des Raumes 3 in den Kanal 25 eintreten kann. Die Strömungsrichtung beim Betanken ist vom Stutzen 13, vorbei an den Zwischenwänden 20,21,22, durch den Spalt 26 in den Kanal 25 und durch den Stutzen 15 zu einem Aktivkohlefilter. Während des Betriebes können Kraftstoffdämpfe durch die Stutzen 14, 16 in den Raum 3 eintreten. Abgeschiedene Flüssigkeit sammelt sich am Boden 5, sie kann beispielsweise durch die Stutzen 14, 16 wieder zurück in den Tank.

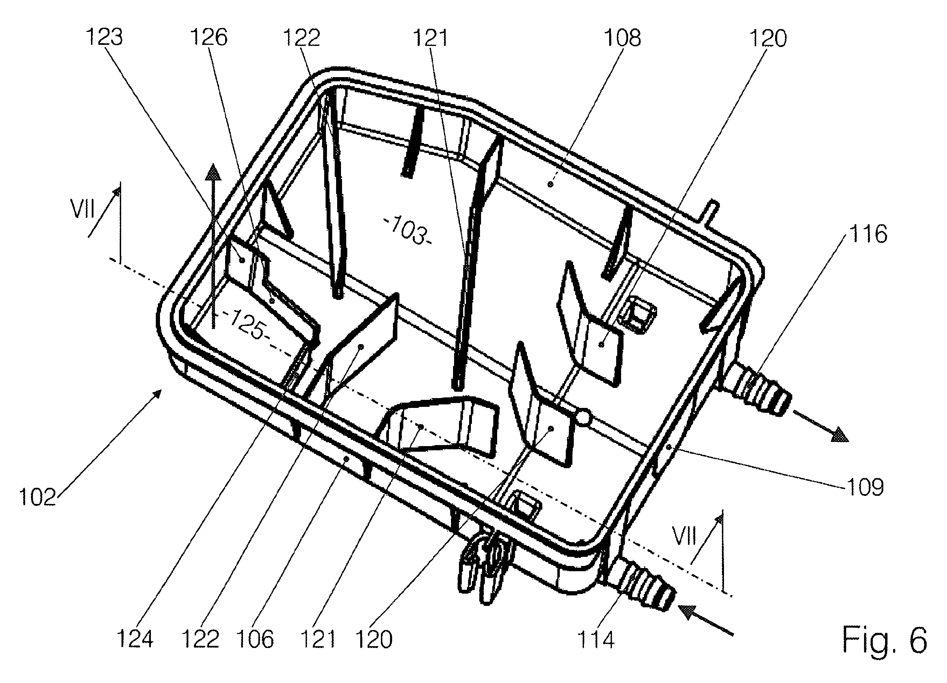

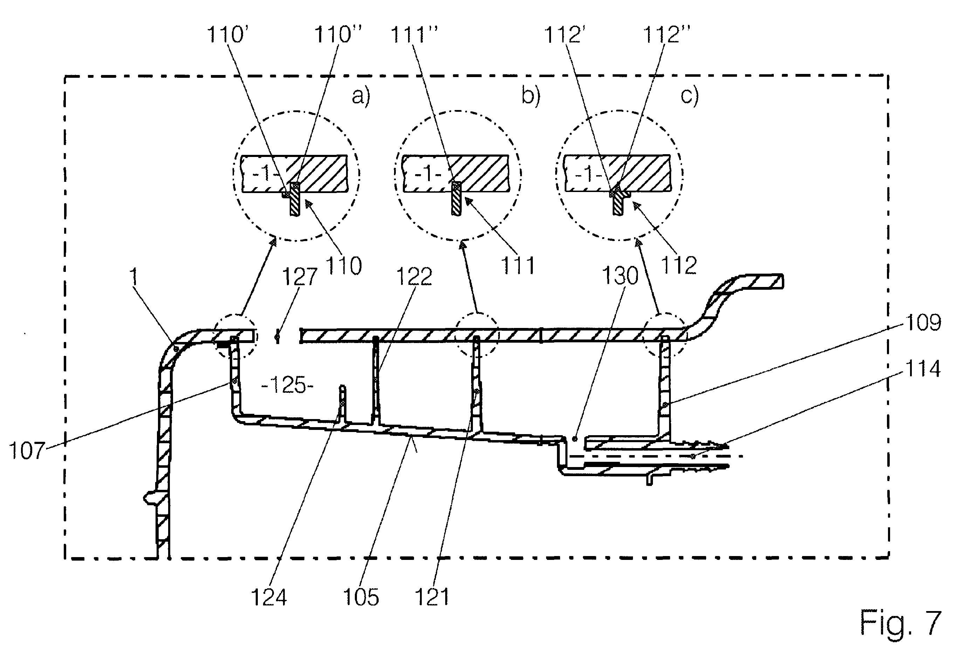

In der Ausführungsform der **Fig. 6** und **7** tragen entsprechende Teile um 100 erhöhte Bezugszeichen. Sie unterscheidet sich im Wesentlichen dadurch von der vorher beschriebenen, dass nur an der Seitenwand 109 zwei Eingansstutzen 114,116 für die Betriebentlüftung vorgesehen sind und dass die zu einem Aktivkohlefilter führende Abströmöffnung 127 in der oberen Wand des Kraftstoffbehälters ist. Die Paare von bis zur Tankwand reichenden Zwischenwänden 120, 121, 122 dienen wieder als Flüssigkeitsfalle. Die Zwischenwand 123 hat einen nicht bis zur Wand 1 des Tanks reichenden Teil 126 und die ganze Zwischenwand 124 reicht nicht bis zur Wand 1.

Ein weiterer kleiner Unterschied besteht darin, dass die Stutzen 114, 116 an der Seitenwand 109 so tief angeordnet sind dass sie unter einer an der tiefsten Stelle des geneigten Bodens 105 angeordneten Öffnung 130 liegen.

In **Fig. 7** sind noch in vergrößerten Blasen verschiedene Formen des Schweißflansches 110 abgebildet. Der Schweißflansch 110 der Seitenwand 107 besteht im Querschnitt aus einer Stützfläche 110' und einer Wurzelrippe 110". Der Schweißflansch 112 der Seitenwand 109 besteht im Querschnitt aus einer Stützfläche 112' und einer Wurzelrippe 112". Die Zwischenwand 121 taucht einfach mit einer Oberkante 111" in die Wand 1 des Tanks ein.

## Patentansprüche

1. Kraftstoffbehälter aus Kunststoff, in dessen Innerem sich ein mit der Wand (1) des Behälters verbundener Einsatz (2; 102) befindet, der einen Raum (3; 103) umschließt, wobei
a) an der Innenseite der oberen Wand (1) des Kraftstoffbehälters als Einsatz (2; 102) eine oben offene Schachtel aus Kunststoff angebracht ist, welche zusammen mit der Wand (1) des Behälters einen geschlossenen Raum (3; 103) bildet,
b) der Einsatz (2; 102) aus einem Boden (5;105) und rundum Seitenwänden (6,7,8,9; 106-109) besteht, deren Oberkanten stoffschlüssig mit der Wand (1) des Behälters verbunden sind,
**dadurch gekennzeichnet, dass**
c) der Einsatz (2; 102) Innenteile (20-26; 120-126) enthält, die mit ihm einstückig sind,
d) wobei an den Seitenwänden (6,7,8,9; 106-109) des Einsatzes mindestens ein Stutzen (13-16; 114,116) für den Anschluss einer Rohrleitung angeformt ist.

2. Kraftstoffbehälter nach Anspruch 1, dadurch **gekennzeichne**t, dass die Innenteile (20-26; 120-126) zumindest teilweise ebenfalls mit der oberen Wand (1) des Kraftstoffbehälters stoffschlüssig verbundene Zwischenwände sind.

3. Kraftstoffbehälter nach Anspruch 1, **dadurch gekennzeichnet, dass** der Boden (5; 105) des Einsatzes (2; 102) geneigt und zumindest ein Stutzen (13; 114,116) an der tiefsten Stelle des Bodens (5; 105) angeordnet ist.

4. Kraftstoffbehälter nach Anspruch 1, **dadurch gekennzeichnet, dass** an der Oberkante der rundum geführten Seitenwände (6,7,8,9; 106-109) des Einsatzes (2;102) ein Schweißflansch (10;110) ausgebildet ist, der eine quer zur Wand (1) des Behälters gerichtete Wurzelrippe (110", 111 ",112") hat.

5. Kraftstoffbehälter nach Anspruch 2, **dadurch gekennzeichnet, dass** die Oberkanten der Zwischenwände (20-26; 120-126) zumindest teilweise mit der Wand (1) verschweißt sind..

6. Kraftstoffbehälter nach Anspruch 4 oder 5, **dadurch gekennzeichnet, dass** der Schweißflansch (112') eine Wurzelrippe (112") mit keilförmigem Querschnitt hat.

7. Kraftstoffbehälter nach Anspruch 1, **dadurch gekennzeichnet, dass** die obere Wand (1) des Kraftstoffbehälters eine Öffnung (127) hat, durch die ein Bereich (125) des Inneren des Einsatzes (102) mit außerhalb des Kraftstoffbehälters angebrachten Teilen in Verbindung steht, wobei der Bereich (125) teilweise von Zwischenwänden (123,124) umgeben ist und zwischen dem Bereich (125) und dem mindestens einen Stutzen (114,116) mindestens eine weitere Zwischenwand (120,121,122) angeordnet ist.

8. Kraftstoffbehälter nach Anspruch 1, **dadurch gekennzeichnet, dass** der Einsatz (2) einen ersten Stutzen (13) an einer Seitenwand (7) und einen zweiten Stutzen (15) an einer ihr gegenüber liegenden Seitenwand (9) hat,
a) wobei in dem Einsatz (2) auf der Seite des ersten Stutzens (13) vom Boden (5) bis zur oberen Wand (1) des Kraftstoffbehälters reichende Zwischenwände (20,21,22) als Tropfenfänger vorgesehen sind, und
b) wobei in dem Einsatz (2) auf der Seite des zweiten Stutzens (15) zwei vom Boden (5) des Einsatzes (2) aufwärts ragende Zwischenwände (23,24) einen vom zweiten Stutzen (15) in den Raum (3) führenden Kanal (25) bilden, an dessen Ende zwischen der Oberkante der Zwischenwände (23,24) und der Wand (1) eine Öffnung (26) ist, sodass der Kanal (25) mit der oberen Region des Raumes (3) strömungsverbunden ist.

9. Kraftstoffbehälter nach Anspruch 9, **dadurch gekennzeichnet, dass** mindestens ein weiterer Stutzen in den von dem Einsatz gebildeten Raum mündet.

## Claims

1. Fuel tank composed of plastic, in the interior of which fuel tank is situated an insert (2; 102) which is connected to the wall (1) of the tank and which encloses a space (3; 103), wherein
a) on the inner side of the top wall (1) of the fuel tank there is mounted, as an insert (2; 102), an upwardly open box which is composed of plastic and which together with the wall (1) of the tank forms a closed chamber (3; 103),
b) the insert (2; 102) is composed of a base (5; 105) and encircling side walls (6,7,8,9; 106-109), the top edges of which are cohesively connected to the wall (1) of the tank,
**characterized in that**
c) the inert (2; 102) comprises internal parts (20-26; 120-126) integral therewith,
d) wherein on the side walls (6,7,8,9; 106-109) of the insert there is integrally formed at least one connecting piece (13-16; 114, 116) for the connection of a pipeline.

2. Fuel tank according to Claim 1, **characterized in that** the internal parts (20-26; 120-126) are intermediate walls which are at least partially likewise cohesively connected to the top wall (1) of the fuel tank.

3. Fuel tank according to Claim 1, **characterized in that** the base (5; 105) of the insert (2; 102) is inclined, and at least one connecting piece (13; 114, 116) is arranged at the lowest point of the base (5; 105).

4. Fuel tank according to Claim 1, **characterized in that**, on the top edge of the side walls (6,7,8,9; 106-109), which are guided in an encircling fashion, of the insert (2; 102), there is formed a welding flange (10; 110) which has a root rib (110", 111'', 112'') directed transversely with respect to the wall (1) of the tank.

5. Fuel tank according to Claim 2, **characterized in that** the top edges of the intermediate walls (20-26; 120-126) are at least partially welded to the wall (1).

6. Fuel tank according to Claim 4 or 5, **characterized in that** the welding flange (112') has a root rib (112'') of wedge-shaped cross section.

7. Fuel tank according to Claim 1, **characterized in that** the top wall (1) of the fuel tank has an opening (127) through which a region (125) of the interior of the insert (102) is connected to parts mounted outside the fuel tank, wherein the region (125) is partially surrounded by intermediate walls (123, 124), and at least one further intermediate wall (120, 121, 122) is arranged between the region (125) and the at least one connecting piece (114, 116).

8. Fuel tank according to Claim 1, **characterized in that** the insert (2) has a first connecting piece (13) on one side wall (7) and has a second connecting piece (15) on an opposite side wall (9),
a) wherein, in the insert (2), at the side of the first connecting piece (13), intermediate walls (20, 21, 22) which extend from the base (5) to the top wall (1) of the fuel tank are provided as droplet catchers, and
b) wherein, in the insert (2), at the side of the second connecting piece (15), two intermediate walls (23, 24) which project upwards from the base (5) of the insert (2) form a duct (25) which leads from the second connecting piece (15) into the space (3), at the end of which duct there is an opening (26) between the top edge of the intermediate walls (23, 24) and the wall (1), such that the duct (25) is connected in terms of flow to the upper region of the space (3).

9. Fuel tank according to Claim 9, **characterized in that** at least one further connecting piece opens into the space formed by the insert.

## Revendications

1. Réservoir de carburant en plastique, à l'intérieur duquel se trouve un insert (2 ; 102) connecté à la paroi (1) du réservoir, lequel entoure un espace (3 ; 103),
a) une boîte en plastique ouverte en haut étant montée sur le côté intérieur de la paroi supérieure (1) du réservoir de carburant en tant qu'insert (2 ; 102), laquelle forme, conjointement avec la paroi (1) du réservoir, un espace fermé (3 ; 103),
b) l'insert (2 ; 102) se compose d'un fond (5 ; 105) et de parois latérales périphériques (6, 7, 8, 9 ; 106-109), dont les arêtes supérieures sont connectées par engagement par liaison de matière avec la paroi (1) du réservoir,
**caractérisé en ce que**
c) l'insert (2 ; 102) contient des parties internes (20-26 ; 120-126) qui sont réalisées d'une seule pièce avec lui,
d) au moins une tubulure (13-16 ; 114, 116) pour le raccordement d'une conduite tubulaire étant façonnée sur les parois latérales (6, 7, 8, 9 ; 106-109) de l'insert.

2. Réservoir de carburant selon la revendication 1, **caractérisé en ce que** les parties internes (20-26 ; 120-126) sont des parois intermédiaires connectées par engagement par liaison de matière au moins en partie également à la paroi supérieure (1) du réservoir de carburant.

3. Réservoir de carburant selon la revendication 1, **caractérisé en ce que** le fond (5 ; 105) de l'insert (2 ; 102) est incliné et au moins une tubulure (13 ; 114, 116) est disposée au point le plus bas du fond (5 ; 105).

4. Réservoir de carburant selon la revendication 1, **caractérisé en ce qu**'une bride de soudage (10 ; 110) est réalisée sur l'arête supérieure des parois latérales périphériques (6, 7, 8, 9 ; 106-109) de l'insert (2 ; 102), laquelle bride de soudage présent une nervure de base (110", 111", 112") orientée transversalement par rapport à la paroi (1) du réservoir.

5. Réservoir de carburant selon la revendication 2, **caractérisé en ce que** les arêtes supérieures des parois intermédiaires (20-26 ; 120-126) sont soudées au moins en partie à la paroi (1).

6. Réservoir de carburant selon la revendication 4 ou 5, **caractérisé en ce que** la bride de soudage (112') a une nervure de base (112") de section transversale cunéiforme.

7. Réservoir de carburant selon la revendication 1, **caractérisé en ce que** la paroi supérieure (1) du réservoir de carburant présente une ouverture (127) à travers laquelle une région (125) de l'intérieur de l'insert (102) est en liaison avec des parties montées à l'extérieur du réservoir de carburant, la région (125) étant partiellement entourée par des parois intermédiaires (123, 124), et entre la région (125) et l'au moins une tubulure (114, 116) est disposée au moins une autre paroi intermédiaire (120, 121, 122).

8. Réservoir de carburant selon la revendication 1, **caractérisé en ce que** l'insert (2) présente une première tubulure (13) sur une paroi latérale (7) et une deuxième tubulure (15) sur une paroi latérale opposée (9),
a) des parois intermédiaires (20, 21, 22) s'étendant dans l'insert (2) du côté de la première tubulure (13) depuis le fond (5) jusqu'à la paroi supérieure (1) du réservoir de carburant étant prévues sous forme de collecteur de gouttes, et
b) deux parois intermédiaires (23, 24) saillant vers le haut dans l'insert (2) du côté de la deuxième tubulure (15) depuis le fond (5) de l'insert (2) formant un canal (25) conduisant depuis la deuxième tubulure (15) dans l'espace (3), une ouverture (26) étant prévue à l'extrémité dudit canal entre l'arête supérieure des parois intermédiaires (23, 24) et la paroi (1), de telle sorte que le canal (25) soit connecté fluidiquement à la région supérieure de l'espace (3).

9. Réservoir de carburant selon la revendication 9, **caractérisé en ce qu**'au moins une autre tubulure débouche dans l'espace formé par l'insert.
